# NEUE EUROPÄISCHE PATENTSCHRIFT

(11) **EP 2 149 490 B2**
(45) Veröffentlichungstag und Bekanntmachung des Hinweises auf die Entscheidung über den Einspruch: **10.05.2017**
(45) Hinweis auf die Patenterteilung: 13.02.2013
(21) Anmeldenummer: 09008029.2
(22) Anmeldetag: 19.06.2009
(51) Int. Cl.: B62D 33/02

(54) **Fahrzeugaufbau für Nutzfahrzeuge mit höhenverstellbaren Eckrungen**
Vehicle deck for commercial vehicles with height adjustable stanchions
Plate-forme pour véhicules utilitaires avec ranchers à hauteur réglable

(30) Priorität: 31.07.2008 DE 102008035767; 31.07.2008 DE 102008035768; 31.07.2008 DE 102008035769
(43) Veröffentlichungstag der Anmeldung: 03.02.2010
(73) Patentinhaber: Fahrzeugwerk Bernard Krone GmbH, 48480 Spelle (DE)
(72) Erfinder: Irion, Manfred, 49757 Werlte (DE); Menke, Ansgar, 49757 Werlte (DE)
(74) Vertreter: Busse & Busse

(56) Entgegenhaltungen:
- DE-A1- 3 138 338
- DE-A1- 10 211 211
- DE-A1- 10 247 479
- DE-B3- 10 241 754
- DE-B3- 10 241 754
- DE-C1- 10 210 773
- DE-C1- 19 922 513
- DE-C1- 19 922 513
- Betriebsanleitung "Planenauflieger", Schmitz Cargobull AG, Nr. BA 919316, Druckvermerk 11/05
- V. BRAUN: 'Der Internationale' KFZ-ANZEIGER Bd. 17, 2007, Seiten 38 - 41

## Beschreibung

Die Erfindung bezieht sich auf einen Fahrzeugaufbau für Nutzfahrzeuge mit einer Stirnwand und einer vorzugsweise Flügeltüren umfassenden Rückwand sowie einem sich zwischen der Rückwand, der Stirnwand und der vorzugsweise flexibel ausgebildeten Seitenwandungen erstreckenden, an Längsträgern und Querträgern festlegbaren Hubdach, welche auf höhenverstellbaren vorderen und hinteren Eckrungen abgestützt sind, die über Kraftheber in unterschiedliche Höhenpositionen bewegbar sind.

Fahrzeugaufbauten der vorgenannten Art für unterschiedliche Be- und Entladezwecke mit Hubdächern, sind insbesondere für Sattelauflieger mit Planenaufbauten und Schiebedächern bekannt.

Solche Hubdächer sind insbesondere deshalb von Interesse, da in Europa mit Ausnahme einiger Länder in Süd- und Osteuropa Fahrzeuge nur mit einer maximalen Aufbauhöhe von 4.000 mm im Straßenverkehr bewegt werden dürfen. In einigen süd- und osteuropäischen Ländern sind jedoch auch Aufbauhöhen von mehr als 4 Metern zugelassen. In diesen Ausnahmeländern können Aufbauten auch in einer Höhe oberhalb von 4.000 mm, d.h. in einem angehobenen Zustand, mit einem Mehr an Laderaum gefahren werden. Um einen Fahrzeugaufbau in einen angehobenen Zustand zu überführen, sind bei bekannten Lösungen aufwändige Hebemittel und Verriegelungselemente vorzusehen. Darüber hinaus ist ein hoher Justieraufwand zu betreiben.

Aus der DE 199 22 513 C1 ist eine Eckrunge mit einem höhenverstellbaren Schiebling für Lastfahrzeuge bekannt, die aus einem starren profilierten Rungenkörper und einem darin angeordneten und aus diesem ein- und ausschiebbaren Schiebling besteht. Um eine Höhenverstellbarkeit des Schieblings zu erreichen, wird in den Rungenkörper zwischen dem Schiebling und einem mit dem starren Rungenkörper verbindbaren Stützkörper eine Kolbenzylinderanordnung eingebaut, mit der sich der Schiebling in eine erhöhte Position bringen lässt. Damit ist ein aüfwändiges Hebemittel mit einem damit einhergehenden hohen Justieraufwand vorzusehen.

Aus der DE 102 41 754 3 ist eine höhenverstellbare Rungensäule für ein Lastfahrzeug bekannt, die eine einen Schiebekanal aufsitzende Basisrunge und einen in dem Schiebekanal höhenverstellbar angeordneten Schiebling mit einem hinterschnittenen Profil aufweist. In dem Schiebling ist ein flacher Feststeller anzuordnen, mit dem der Schiebling lösbar an der Rungensäule zu befestigen ist. Um den Schiebling auf ein bestimmtes Höhenmaß festzulegen, ist dieser in die gewünschte Höhenposition zu bringen und dann dort mittels des Feststellers zu arretieren. Somit sind auch bei dieser Lösung aufwändige Justierarbeiten erforderlich.

Aus der DE 31 38 338 A1 ist ein Nutzfahrzeug mit einem Planenaufbau bekannt, der teleskopierbar ausgebildete Rungen mit einem verfahrenbaren Rungenabschnitt aufweist, wobei über den verfahrbaren Rungenabschnitt ein Planenaufbau in der gewünschten Höhe zu erhalten ist. Auch hierbei sind entsprechende aufwändige Justierarbeiten für die Höhenverstellung erforderlich.

Es ist Aufgabe der vorliegenden Erfindung, einen Fahrzeugaufbau der eingangs genannten Art zu schaffen, bei dem mit einem relativ geringen Bedienaufwand zuverlässig eine angehobene Position des Hubdaches eingestellt werden kann.

Zur Lösung dieser Aufgabe zeichnet sich der Fahrzeugaufbau der eingangs genannten Art durch die im Patentanspruch 1 angegebenen Merkmale aus.

Damit ist ein Fahrzeugaufbau geschaffen, bei dem in außerordentlich bedienerfreundlicher Weise bei einer Höhenverstellung lediglich zunächst die Kraftheber z.B. per Knopfdruck nach einer entsprechenden Entriegelung von z.B. Türen, Freigabe von Seitenwandungen usw. zu aktivieren sind, wonach sie automatisch die erhöhte, insbesondere ihre maximale Höhenposition anfahren, so dass sich die Eckrungen bzw. entsprechende Schubstücke von Eckrungen in ihrer maximal ausgefahrenen Position befinden. In Eckrungen ist das entsprechende Widerlager in eine Position gebracht, die dem einzustellenden Höhenmaß entspricht. Nach Deaktivierung, z.B. Drucklosschalten eines insbesondere als Hydraulikzylinder ausgebildeten Krafthebers, senkt sich nun das Hubdach automatisch ohne eine irgendwie gearteten zusätzlichen Steuerungs- oder Justieraufwand infolge Schwerkraft ab und gelangt in eine abgesenkte Position, an der sich z.B. Schubstücke von Eckrungen, an denen das Hubdach befestigt ist, an dem jeweiligen Widerlager abstützen. Damit ist automatisch die exakt eingestellte Höhenposition eingenommen. Die Bedienperson braucht nur noch die für eine Verriegelung insgesamt notwendigen Schritte zu vollziehen, z.B. Schließen von Seitenwänden, Verriegeln von Türen und dergleichen, wonach ein gewünschtes anderes Transport- bzw. Aufbauhöhenmaß eingestellt ist. Dies ist außerordentlich schnell zu vollziehen und kann mit einem geringstmöglichen Risiko hinsichtlich einer Fehleinstellung durchgeführt werden.

Vorzugsweise sind die Kraftheber als Hydraulikzylinder ausgebildet, wobei die beiden den beiden seitlichen vorderen Eckrungen zugeordneten Hydraulikzylinder synchron geschaltet sind. Ebenso sind die Zylinder für die hinteren Eckrungen synchron geschaltet, so dass von einer Hydraulikpumpe lediglich ein Zylinder mit dem Druckmedium zu versorgen ist, und von diesem ersten Hydraulikzylinder das Druckmedium zu dem benachbarten Hydraulikzylinder gelangt, so dass synchron und ohne das Risiko eines Verkantens das Hubdach gleichmäßig vorne, aber auch gleichmäßig hinten durch die Kraftheber anzuheben ist. Es ist auch möglich, Kraftheber von jeweils einer hinteren und vorderen Eckrungen synchron zu schalten. Eckrungen haben ein höhenbewegliches und höhenmäßig arretierbares Schubstück, an das der Kraftheber angreifen kann. Dabei muss z.B. eine Schubstange eines Krafthebers nicht fest mit dem Schubstück verbunden sein. Vielmehr kann er von unten gegen ein entsprechendes Schubstück verfahren werden, wonach er dieses kontaktiert und es z.B. in die maximale Höhenposition verfährt. Danach kann er auch relativ zu dem Schubstück zurück in seine Ausgangslage nach entsprechendem Drucklosschalten der Krafthebel verfahren werden, da das Hubdach und mithin auch das Schubstück infolge der Schwerkraft und mithin selbsttätig zu dem jeweiligen Widerlager nach unten verfährt.

In einer Eckrunge ist ein Schlüsselloch bzw. Schlüsselelement vorgesehen, mit dem ein bevorzugtermaßen als Schiebeelement ausgebildeter Schlüssel zusammenwirkt, der relativ beweglich zu dem Schlüsselelement ausgeführt ist. Das Schlüsselelement ist im Inneren der Eckrunge angeordnet. Oberhalb des Schlüssels ist das Schubstück angeordnet, wiederum im Inneren der Eckrunge. Somit sind diese Teile verdeckt in der Eckrunge angeordnet, so dass nur noch entsprechende Betätigungselemente des Schlüssels von außen her zugänglich sind. Der Schlüssel als Schiebeelement hat vorzugsweise Nuten, die in Schlitzen des Schlüsselelementes geführt sind und entsprechende Anformungen, die zwecks Arretierung in die entsprechenden Schlüssellöcher des Schlüsselelementes hineingreifen können. Durch eine entsprechende Bedienung, z.B. einer Schlaufe kann der Schlüssel aus dem Schlüsselloch wieder herausgezogen werden und in eine entsprechende andere Position bewegt werden, um dort ein anderes Höhenmaß für eine Widerlagerposition für das Schubstück und damit das Hubdach einzunehmen. Dies vollzieht sich jedoch alles innerhalb der Eckrunge, so dass eine auch spritzwassergeschützte sichere innere Lage beibehalten werden kann. Um auch bei einer erhöhten Transportaufbauhöhe die Anordnung von außen her verdeckt zu halten, kann an dem Schubstück auch ein mit Abstand zu diesem angeordnetes Schutzblech vorgesehen sein, das in der Niedrigposition des Schubstücks Aufbauteile übergreift, jedoch bei herausgefahrenem Schubstück bei erhöhtem Aufbaumaß das herausgefahrene Schubstück nach außen hin verdeckt.

Bevorzugtermaßen sind die Seitenwände als flexible Plane ausgebildet. Diese ist an ihrer der Vorderwand und der Rückwand zugewandten Seitenkanten an vertikal ausgerichteten Spannstangen festzulegenden, die nach einer Weiterbildung der Erfindung ein Spannstangenrohr und eine in diesem geführte innere Spannrolle aufweist. Die Spannstangen sind längenveränderlich ausgebildet, um der Höhenverstellung des Hubdaches folgen zu können. Die seitlichen Planen sind dazu zweckmäßigerweise derart im Innenbereich in eine Falte gelegt, so dass diese Falte dem Höhenverstellmaß des Aufbaus entspricht. Eine derartige Längenveränderung kann auch die Spannstange durchführen.

Dazu ist zweckmäßigerweise die Spannrolle in unterschiedlichen Positionen an dem Spannstangenrohr mittels eines Riegels festzulegen und kann mithin relativ bewegt werden. Durch den Riegel ist die Spannrolle verdrehsicher an dem Spannstangenrohr festzulegen. Innerhalb der Spannrolle ist eine Schlitzführung zur Aufnahme eines Keders der flexiblen Seitenwand vorgesehen, so dass aus dem Spannstangenrohr die flexiblen Seitenwandungen ebenfalls über eine Schlitzführung herausgeführt ist, so dass alle anderen Teile verdeckt angeordnet sind. Das Spannrohr hat zweckmäßigerweise einen klappbaren Hebel mit einem Verriegelungselement, das von innen in entsprechende Bohrungen in das Spannstangenrohr eingreifen kann. Unterenends hat die Spannrolle bevorzugtermaßen ein Kopfstück, das als Vierkant ausgebildet ist, das in eine entsprechend Vierkantaufnahme des Fahrzeugaufbaus einführbar ist.

Um eine Höhenverstellung durchführen zu können, ist die Spannstange aus der Vierkantaufnahme herauszuheben, wozu zweckmäßigerweise wiederum eine Handschlaufe vorzusehen ist. Zur Verstellung der Spannrolle ist auch zweckmäßigerweise dort eine Handschlaufe vorzusehen. Ansonsten ist auch nur der Hebel von außen her zu bedienen, so dass in bedienerfreundlicher Weise eine Verstellung der Spannstange vorzunehmen ist, ansonsten jedoch alle Teile wiederum außerordentlich spritzgesichert vorgesehen sind. Die Seitenwandung übergreift im montierten Zustand der Teil die Eckrunge, so dass die zollsicher ausgebildet ist.

Um bei unterschiedlichen Höhenlagen die Fahrzeugtür, die ein unverändertes Höhenmaß aufweist, verriegeln zu können, gleichfalls jedoch auch bei einem erhöhten Aufbaumaß eine möglichst der Aufbauhöhe entsprechende Türöffnung vorgesehen zu haben, sieht des Weiteren eine Weiterbildung der Erfindung vor, dass die Rückwand einen diese nach oben hin abschließenden klappbaren, einen Türanschlag und eine Türverriegelung in unterschiedlichen Höhenpositionen der Eckrunge ausbildenden winkelförmigen Portalbalken aufweist.

Der Türflügel hat dabei ein Türsicherungselement, das als verschwenkbarer Riegelfinger ausgebildet ist. Der winkelförmige Profilkörper hat seinerseits Verriegelungsaufnahmen, und zwar in unterschiedlichen Höhenlagern übereinander, die zum einen eine Aufnahme in einer Außenwandung des Portalbalkens aufweist, und zum anderen zum Inneren hin ein hinter dieser Außenwandung in einem kastenförmigen Innenraum angeordnetes Haltestangenelement, das von dem Riegelfinger zu hintergreifen ist. Zum Fahrzeugbauinneren hin ist das Kasteninnere durch eine Wandung abgedeckt, so dass der Portalbalken auch bei einer erhöhten Aufbauhöhe den Fahrzeugaufbau nach außen hin sicher abschließt, so dass auch durch die Aufnahmen in unterschiedlichen Höhenlagen zum Einführen des Riegelfingers des Türverriegelungselementes nicht die Gefahr besteht, dass Feuchtigkeit oder Spritzwasser in das Aufbauinnere gelangt.

Hinsichtlich wesentlicher weiterer Ausgestaltungen der Erfindung wird auf weitere Unteransprüche, die nachfolgende Beschreibung und die Zeichnung verwiesen. In der Zeichnung zeigen:
- Fig. 1: ein Ausführungsbeispiel von Krafthebern für die Eckrungen, die als hydraulische Kraftheber ausgebildet sind,
- Fig. 2: in schematischer Ansicht eine Vorderansicht einer Doppelflügeltür einer Rückwand mit seitlichen Eckrungen,
- Fig. 3: eine Draufsicht auf das Ausführungsbeispiel nach Fig. 2,
- Fig. 4: eine Vorderansicht einer Eckrunge mit zugeordneter Spannstange,

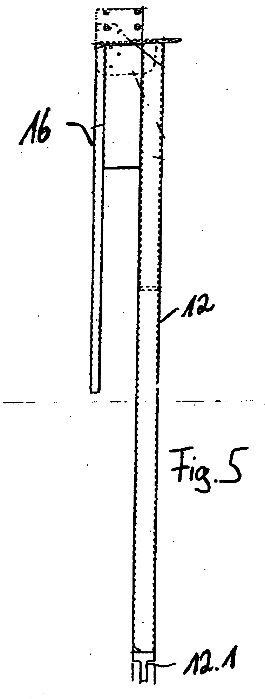

- Fig. 5: ein Ausführungsbeispiel eines Schubstücks einer Eckrunge mit daran befestigtem Schutzblech,
- Fig. 6: ein Ausführungsbeispiel eines Schlüsselelementes einer Eckrunge,

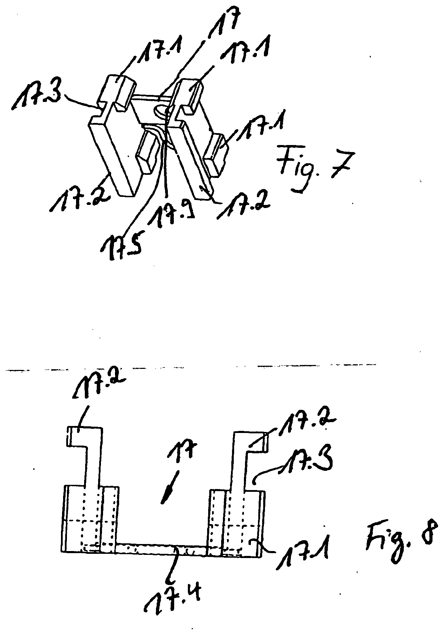

- Fig. 7: in einer perspektivischen Darstellung ein Ausführungsbeispiel eines als Schiebeelement ausgebildeten Schlüssels für das Schlüsselelement,
- Fig. 8: eine Querschnittsdarstellung des Schlüssels nach Fig. 7,

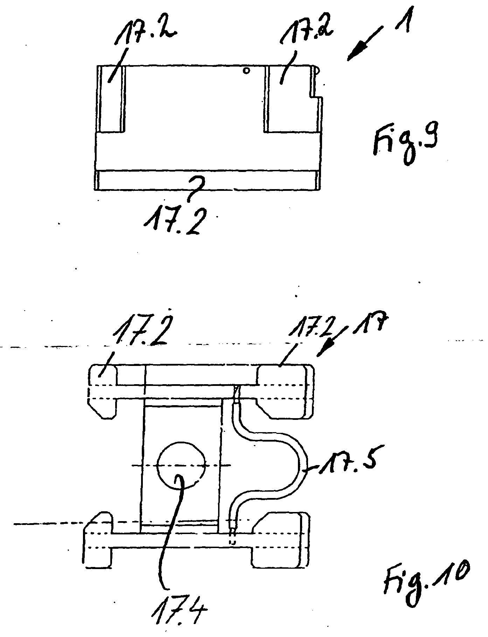

- Fig. 9: eine Seitenansicht des Schlüssels nach Fig. 7 und 8, und
- Fig. 10: eine Draufsicht auf den Schlüssel nach Fig. 7 bis 9,
- Fig. 11: in verschiedenen perspektivischen Ansichten auszugsweise ein Ausführungsbeispiel einer Spannstange,
- Fig. 12: ausschnittsweise eine Draufsicht auf einen hinteren Türflügel mit einem oberen klappbaren Portalbalken,
- Fig. 13: eine Seitenansicht auf das Ausführungsbeispiel nach Fig. 12,
- Fig. 13a: eine Vergrößerung des Details nach Fig. 13,

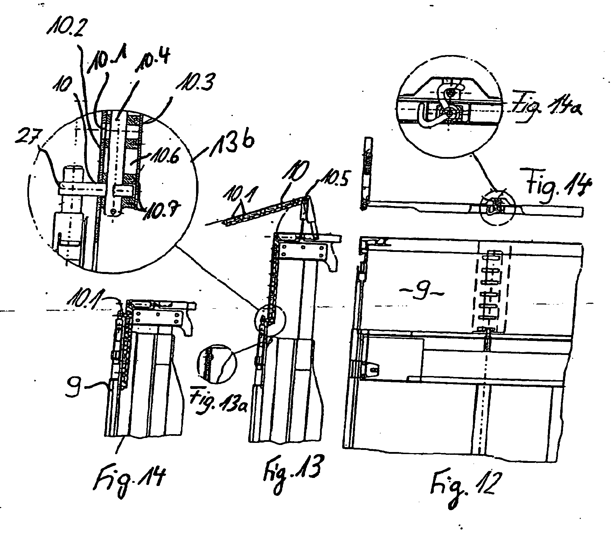

- Fig. 13 b: eine Vergrößerung des Details nach Fig. 13,
- Fig. 14: eine analoge Darstellung zu Fig. 13 bei abgesenktem Portalbalken, der sich in der abgesenkten Position hinter dem Türflügel erstrecken
- Fig. 14a: eine Vergrößerung des Details nach Fig. 14.

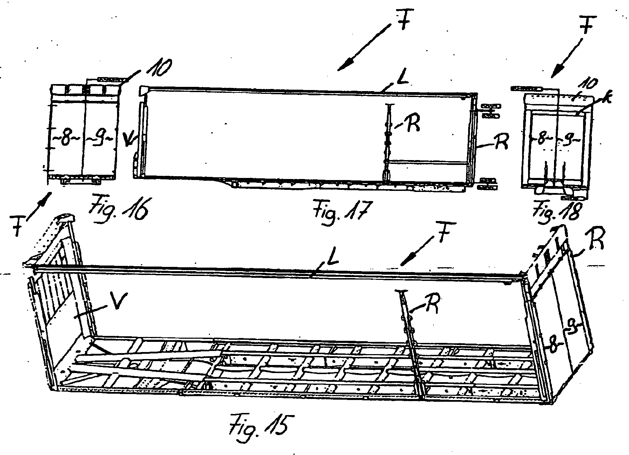

- Fig. 15: in einer schematisch-perspektivischen Darstellung ein Ausführungsbeispiel eines Fahrzeugaufbaus;
- Fig. 16: eine Ansicht von hinten auf den Fahrzeugaufbau nach Fig. 15;
- Fig. 17: eine Seitenansicht des Fahrzeugaufbaus nach Fig. 15, und
- Fig. 18: eine Vorderansicht des Fahrzeugaufbaus nach Fig. 15.

In der Zeichnung sind grundsätzlich gleichwirkende Teile mit übereinstimmenden Bezugsziffern versehen.

In der Zeichnung ist in den Fig. 15 bis 18 allgemein ein Fahrzeugaufbau F veranschaulicht, der wie herkömmlich ein Fahrgestell haben soll, das über Räder auf dem Erdboden abstützbar ist. Dieser hat eine Rückwand R, die in den meisten Anwendungsfällen eine an den hinteren Eckrungen 11 verschwenkbar abgestützte Türflügel 8, 9 hat. Zusätzlich ist eine Stirnwand S im vorderen Bereich des Fahrzeugaufbaus F vorgesehen. Rückwand R und Stirnwand S sind über obere Längsträger L verbunden, die genauso wie vordere und hintere Querträger 10 an den vorderen beiden Eckrungen 11 wie auch an den hinteren beiden Eckrungen 11 abgestützt sind. Zusätzlich können noch weitere Rungen R vorgesehen sein, z.B. ein oder mehrere mit Abstand voneinander zwischen den vorderen und hinteren Eckrungen angeordnete Seitenrungen.

Oberhalb der Längs- und Querträger L, 10 ist ein nicht dargestelltes Dach vorgesehen, das in dem vorliegenden Ausführungsbeispiel als Hubdach ausgebildet ist. An den Seitenwandbereichen ist in den meisten Anwendungsfällen eine nicht dargestellte Seitenwandplane vorzusehen, die gleitverschieblich gehaltert ist, um das Fahrzeuginnere auch von der Seite her beladen zu können. Ebenfalls ist es möglich, das Hubdach mit einem Schiebedach zu versehen. Im Rahmen der vorliegenden Erfindung geht es darum, das Hubdach in unterschiedlichen Höhenpositionen feststellen zu können, um ein Fahrzeugaufbau zu schaffen, der bedienfreundlich und auf einfache und sichere Weise auf unterschiedliche Aufbauhöhen einzustellen ist.

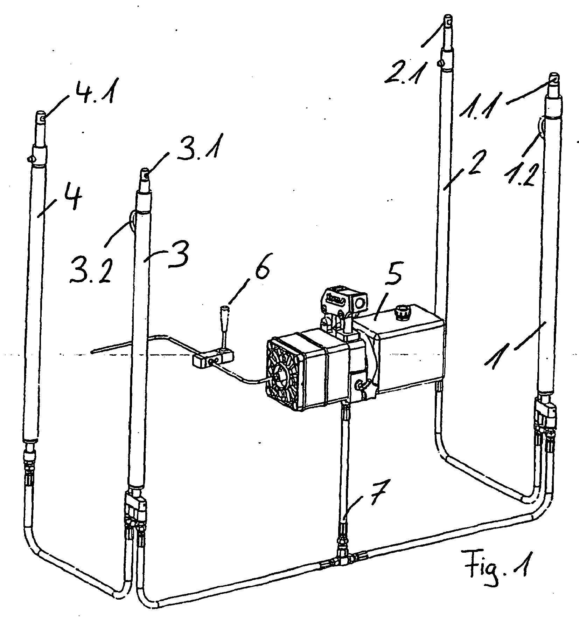

Dazu sind in dem in Fig. 1 gezeigten Ausführungsbeispiel insgesamt vier als Hydraulikzylinder ausgebildete Kraftheber 1, 2, 3 und 4 vorgesehen, die entsprechende Hubstangen 1.1, 2.1, 3.1 und 4.1 aufweisen. Diese werden von einer Pumpe 5 mit einem Hydraulikmedium versehen, wobei nach Aktivierung zunächst über eine Hydraulikleitung 7 die beiden Zylinder 1 und 3 mit dem Hydraulikmedium versehen werden und dann über eine jeweilige Leitung 1.2 und 3.2 die Zylinder 2 und 4 mit dem Hydraulikmedium beaufschlagt werden, so dass die Zylinder 1 und 2 synchron und zum anderen die Zylinder 3 und 4 synchron geschaltet sind. Über einen Hebel 6 sind die Leitungen drucklos zu schalten, so dass dann die Schubstangen 1.1, 2.1, 3.1 und 4.1 selbsttätig ihre eingefahrene Ausgangsposition wieder einnehmen können.

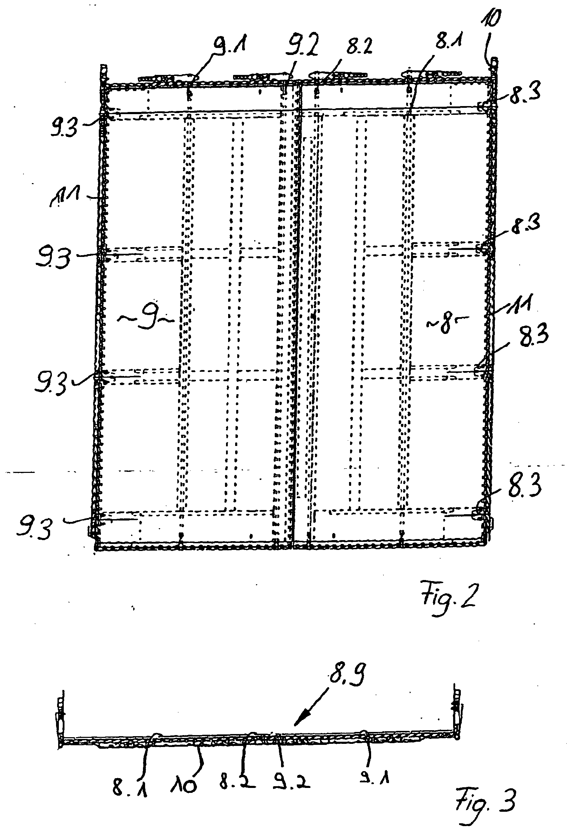

In den Fig. 2 und 3 ist die Rückwand eines Fahrzeugaufbaus nach einem Ausführungsbeispiel gezeigt, die zwei aufschwenkbare Türflügel 8 und 9 aufweist mit entsprechenden Verriegelungsstangen 8.1 und 8.2 bzw. 9.1 und 9.2. Diese Verriegelungsstangen greifen ein in jeweilige Haltestangen eines Portalbalkens 10, der noch näher anhand der Fig. 12, 13 und 14 erläutert werden wird. Die Heckflügeltüren 8 und 9 sind über Scharniere 8.3 bzw. 9.3 an Eckrungen 11 des Fahrzeugaufbaus schwenkbeweglich gehaltert.

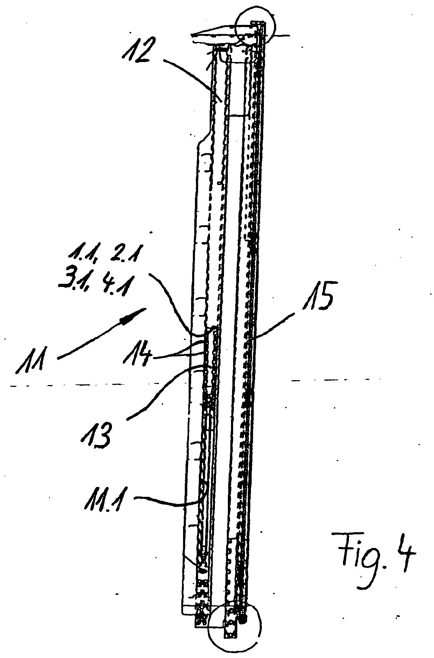

Diese Eckrungen 11 sind höhen- bzw. längenveränderlich ausgebildet, und zwar nach entsprechender Aktivierung der Kraftheber 1, 2, 3 und 4 und Herausfahren der Schubstangen 1.1, 2.1, 3.1 und 4.1. Dazu weist die aus Fig. 4 ersichtliche Eckrunge ein Schubstück 12 auf und ein Schlüsselelement 13, an dem das Schubstück 12 höhenbeweglich entlanggleiten kann.

Wie aus Fig. 4 ersichtlich, hat das Schlüsselelement 13 eine Anzahl von Schlüssellöchern 14, die in der Darstellung nach Fig. 4 teilweise aufgrund der dort eingenommenen Höhenlage verdeckt sind. Das Schubstück 13 ist in der Eckrunge 11 versenkt angeordnet, wozu die Eckrunge 11 eine nuten- bzw. schlitzförmige Öffnung 11.1 hat. Das ansonsten im oberen Bereich der Eckrunge 11 ersichtliche Schubstück 12 ist weitestgehend abgedeckt.

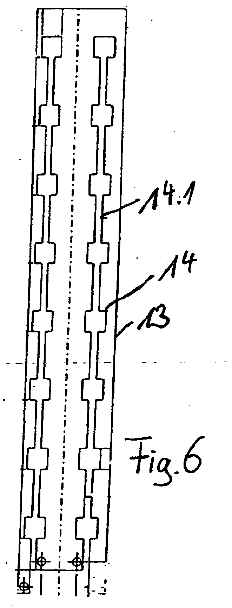

Dem Schubstück 12 ist ein Schlüssel 17 zugeordnet. Dieser hat seitliche abgewinkelte Anformungen 17.2, so dass sich zwischen den Anformungen 17.1 und den Abwinkelungen 17.2 eine nutenförmige Aufnahme 17.3 ergibt. Wie aus Fig. 6 ersichtlich, sind die Schlitze 14.1 des Schlüsselelementes 13 nach unten hin offen, so dass von unten der als Schiebeelement ausgebildeter Schlüssel 17 eingeführt werden kann, wonach er mit seinen Aufnahmen 17.3 die den Schlitzen 14.1 benachbarten Bereiche des Schlüsselelementes 13 aufnimmt. Hat er ein entsprechendes Höhenmaß erreicht, was einer bestimmten Aufbauhöhe entspricht, kann er in die Schlüssellöcher 14 mit seinen Anformungen eingedrückt werden, so dass der Schlüssel 12 in dieser Position arretiert ist. Gelangt das Schubstück 12 infolge seiner Schwerkraft nach Drucklosstellung der Kraftheber in eine abgesenkte Position, kann es sich an dem arretierten Schlüssel 17 als Widerlager abstützen, so dass dies der eingestellten Höhenposition der Eckrunge 11 entspricht. Dies ist auch die eingestellte Höhe des Nutzfahrzeugaufbaus und damit des Hubdaches und des Portalbalkens 10, was noch näher erläutert werden wird. In der arretierten Position kann der Schlüssel 17 zusätzlich noch gesichert werden, z.B. über eine Schraubverbindung, die in das Loch 17.4 eingreift. Um den Schlüssel wieder aus der Arretierung herauszuziehen, ist im dargestellten Ausführungsbeispiel eine Schlaufe 17.5 vorgesehen.

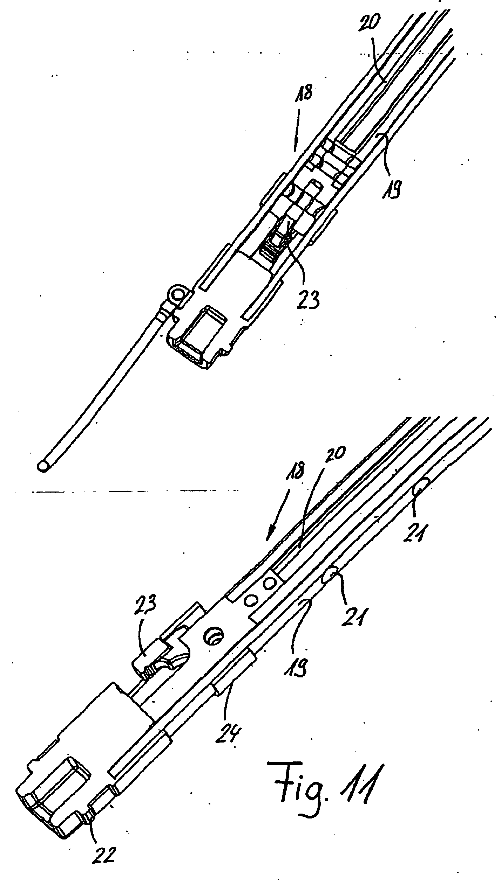

In Fig. 11 ist näher eine allgemein mit 18 bezeichnete Spannstange dargestellt. Diese hat ein Spannstangenrohr 19 und eine innerhalb des Spannstangenrohrs 19 gelegene Spannrolle 20. Die Spannstange 18 hat Bohrungen 21, in die Verriegelungselemente des Spannstangenrohres 19 einzubringen sind. Die Spannrolle 20 ist relativ zu dem Spannstangenrohr 19 zu bewegen. Die Spannstange 18 hat in ihrem unteren Bereich ein Kopfstück 22, das als Vierkant ausgebildet ist, und das in eine entsprechende Vierkantaufnahme des Fahrzeugaufbaus im montierten Zustand der Teile eingeführt ist. Dabei umgreift im übrigen die Seitenwandung eine Eckrunge 11. An der Spannrolle 20 ist ein Hebel 23 vorgesehen, der mit den nicht sichtbaren Verriegelungselement wirkt. Dieser ist einzudrücken und auch herauszubewegen und wird durch einen Sicherungsring 24 gesichert. Nachdem die Spannstange 18 in die Vierkantaufnahme des Fahrzeugaufbaus über das Kopfstück 22 eingesetzt ist, kann die Seitenwandung über die Spannrolle 20 gespannt werden. Das Spannstangenrohr 19 hat dazu eine schlitzförmige Aufnahme, so dass ein entsprechender Keder in die Spannrolle 20 eingeführt werden kann, so dass sämtliche Teile geschützt anzuordnen sind.

Aus den Fig. 12 bis 14 ist näher der Bereich der Rückwand 9 mit dem erfindungsgemäßen Portalbalken 10 ersichtlich, der wie aus Fig. 13 ersichtlich als abgewinkelter Profilkörper ausgebildet ist, der um eine horizontale Achse 10 zu verschwenken ist. Dieser Portalbalken 10 hat verschiedene übereinander angeordnete Verriegelungsaufnahmen 10.1, die von einem Riegelfinger 27 von Türsicherungselementen 8.1, 8.2, 9.1, 9.2. zu durchdringen sind. Der Portalbalken 10 selber ist als Kasten ausgebildet mit einer Vorderwandung 10.2 und einer Rückwandung 10.3 und einer inneren Haltestange 10.4, die von dem Riegelfinger 27 umgriffen werden kann. Dadurch, dass dieser schwenkbar ausgebildet ist, kann auch bei erhöhtem Nutzfahrzeugaubau, wie er aus Fig. 13 zu ersehen ist, nach entsprechendem Hochverschwenken des Profilbalkens 10 die ganze Nutzfahrzeughöhe zur Beladung freigegeben werden. Bei abgesenktem Hubdach erstreckt sich der Portalbalken 10 im wesentlichen hinter der Tür 9, wobei dann die obere Aufnahme 10.1 des Portalbalkens 10 von dem Verriegelungsfinger 27 genutzt wird. Im Kasteninneren 10.6 sind Lagerböcke 10.7 vorgesehen, die sich von der Vorderwand 10.2 bis zur Rückwand 10.3 erstrecken und den gesamten Aufbau aussteifen und zudem als Zentrierung für die Verriegelungsfinger 27 dienen.

## Patentansprüche

1. Fahrzeugaufbau für Nutzfahrzeuge mit einer Stirnwand und einer vorzugsweise Flügeltüren (8, 9) umfassenden Rückwand sowie mit einem sich zwischen der Stirnwand und der Rückwand sowie Seitenwänden erstreckenden, an Längsträgern und Querträgern festlegbaren Hubdach, welche auf höhenverstellbaren vorderen und hinteren Eckrungen (11) abgestützt sind, die über Kraftheber (1, 2, 3, 4) in unterschiedliche Höhenpositionen überführbar sind, **dadurch gekennzeichnet, dass** benachbarte Kraftheber (1, 2, 3, 4) von Eckrungen (11) nach jeweiliger Aktivierung die benachbarten Eckrungen (11) in eine erhöhte Höhenposition überführen und diese Eckrungen (11) nach Deaktivierung der Kraftheber (1, 2, 3, 4) infolge Schwerkraft in eine durch ein jeweiliges Widerlager (17) einstellbare Höhenposition absinken, wobei die Eckrungen(11) jeweils ein höhenbewegliches und ein arretierbares Schubstück (12) aufweisen, das mit einer Schubstange (1.1, 2.1, 3.1, 4.1) eines Krafthebers (1, 2, 3, 4) verbindbar ist, wobei das Schubstück (12) entlang eines Schlüsselelementes (13) einer Eckrunge (11) bewegbar ist, an welchem ein Schlüssel (17) als Widerlager höhenverstellbar arretierbar ist, und wobei der Schlüssel (17) als Schiebeelement ausgebildet und in Schlitzführungen (14.1) des Schlüssetelementes (13) höhenbeweglich geführt ist.

2. Fahrzeugaufbau nach Anspruch 1, **dadurch gekennzeichnet, dass** die Kraftheber (1, 2) von zwei vorderen Eckrungen (11) und die Kraftheber (3, 4) von zwei hinteren Eckrungen (11) jeweils gemeinsam in ihre erhöhte Höhenposition überführen.

3. Fahrzeugaufbau nach Anspruch 1 oder 2, **dadurch gekennzeichnet, dass** die Kraftheber (1, 2, 3, 4) die Eckrungen jeweils in ihre Maximalhöhenposition überführen.

4. Fahrzeugaufbau nach einem der Ansprüche 1 bis 3, **dadurch gekennzeichnet, dass** die Kraftheber (1, 2, 3, 4) von benachbarten Eckrungen synchron schaltbar sind.

5. Fahrzeugbau nach Anspruch 4, **dadurch gekennzeichnet, dass** die Kraftheber (1, 2, 3, 4) als Hydraulikzylinder ausgebildet sind und das Hydraulikmedium von einer Hydraulikpumpe (5) einem der Kraftheber (1, 3) einer vorderen und einer hinteren Eckrunge (11) zuleitbar ist, und dem synchron geschalteten zweiten Kraftheber (2, 4) der vorderen Eckrunge (11) bzw. der hinteren Eckrunge (11) das Hydraulikmedium von dem jeweils ersten Kraftheber (1, 3) zugeführt wird.

6. Fahrzeugaufbau nach Anspruch 4 oder 5, **dadurch gekennzeichnet, dass** der Schlüssel (17) in Lochausnehmungen (14) des Schlüsselelementes (13) einführbar ist.

7. Fahrzeugaufbau nach Anspruch 6, **dadurch gekennzeichnet, dass** der Schlüssel in Lochausnehmungen (14) des Schlüsselelementes (13) einführbare Arretieranformungen (17.2) aufweist.

8. Fahrzeugaufbau nach einem der Ansprüche 1 bis 7, **dadurch gekennzeichnet, dass** der Schlüssel (17) mittels einer Handschlaufe (17.5) von dem Schlüsseletement (13) lösbar ist.

9. Fahrzeugaufbau nach einem der Ansprüche 4 bis 8, **dadurch gekennzeichnet dass** das innere Schubstück (12) ein mit Abstand zu diesem angeordnetes Schutzblech (16) aufweist, das mit dem Schubstück (12) höhenverstellbar ist und bei einer Höhenverstellung das Höhenverstellmaß überdeckt.

10. Fahrzeugaufbau nach Anspruch 9, **dadurch gekennzeichnet, dass** das Schutzblech 816) eine Längenerstreckung hat, die der maximalen Höhenverstellung der Eckrunge (11) entspricht.

## Claims

1. Vehicle body for commercial vehicles having a front wall and a rear wall that preferably comprises door leaves (8, 9), and having a lifting roof which extends between the front wall and the rear wall and between side walls and which can be secured to longitudinal beams and transverse beams which are supported on height-adjustable front and rear corner posts (11) which can be moved into various height positions by means of power lifts (1, 2, 3, 4), **characterised in that**, after being activated, adjacent power lifts (1, 2, 3, 4) of corner posts (11) move the adjacent corner posts (11) into a raised height position and, after the power lifts (1, 2, 3, 4) have been deactivated, these corner posts (11) are lowered by gravity into a height position which can be set by means of a relevant abutment (17), the corner posts (11) each having a vertically movable thrust piece (12) which can be locked and connected to a thrust rod (1.1, 2.1, 3.1, 4.1) of a power lift (1, 2, 3, 4), it being possible to move the thrust piece (12) along a key-engaging element (13) of a corner post (11), to which element a key (17) can be locked in a height-adjustable manner to act as the abutment, and the key (17) taking the form of a sliding element and being guided so as to be vertically movable in guiding slots (14.1) in the key-engaging element (13).

2. Vehicle body according to claim 1, **characterised in that** the power lifts (1, 2) of two front corner posts (11) and the power lifts (3, 4) of two rear corner posts (11) move into their raised height positions together in each case.

3. Vehicle body according to either claim 1 or claim 2, **characterised in that** the power lifts (1, 2, 3, 4) move the corner posts into their respective maximum height positions.

4. Vehicle body according to any of claims 1 to 3, **characterised in that** the power lifts (1, 2, 3, 4) of adjacent corner posts can be switched in synchronisation.

5. Vehicle body according to claim 4, **characterised in that** the power lifts (1, 2, 3, 4) are in the form of hydraulic cylinders and the hydraulic medium can be conveyed from a hydraulic pump (5) to one of the power lifts (1, 3) of a front and a rear corner post (11), and the hydraulic medium is fed from the relevant first power lift (1, 3) to the second power lift (2, 4) of the front (11) or rear corner post (11), respectively, which second power lift is switched in synchronisation.

6. Vehicle body according to either claim 4 or claim 5, **characterised in that** the key (17) can be inserted in recesses (14) in the key-engaging element (13).

7. Vehicle body according to claim 6, **characterised in that** the key has locking projections (17.2) which can be inserted in recesses (14) in the key-engaging element (13).

8. Vehicle body according to any of claims 1 to 7, **characterised in that** the key (17) can be released from the key-engaging element (13) by means of an assist strap (17.5).

9. Vehicle body according to any of claims 4 to 8, **characterised in that** the inner thrust piece (12) has a protective plate (16) arranged at a distance therefrom which is height-adjustable with the thrust piece (12) and which covers the distance by which a height adjustment is made when the height is adjusted.

10. Vehicle body according to claim 9, **characterised in that** the protective plate (16) has a longitudinal extension that corresponds to the maximum height adjustment of the corner post (11).

## Revendications

1. Structure pour véhicules utilitaires comprenant une paroi avant et une paroi arrière, comportant de préférence des portes-papillon (8, 9), ainsi qu'un toit relevable s'étendant entre la paroi avant et la paroi arrière ainsi que les parois latérales et pouvant être fixé sur des longerons et des traverses, lesquels sont en appui sur des ranchers (11) avant et arrière à hauteur réglable qui peuvent être transférés par des vérins (1, 2, 3, 4) dans différentes positions verticales, **caractérisée en ce que** des vérins (1, 2, 3, 4) contigus de ranchers (11) transfèrent après activation respective les ranchers contigus (11) dans une position verticale relevée et abaissent ces ranchers (11) après désactivation des vérins (1, 2, 3, 4) suite à la force de gravité dans une position verticale réglable par un contre-appui respectif (17), les ranchers (11) comportant respectivement une pièce de poussée (12) qui est mobile en hauteur, qui peut être bloquée et qui peut être reliée à une bielle (1.1, 2.1, 3.1, 4.1) d'un vérin (1, 2, 3, 4), la pièce de poussée (12) pouvant être mobile le long d'un élément de clé (13) d'un rancher (11) sur lequel une clé (17) peut être bloquée de manière réglable en hauteur pour servir de contre-appui, et la clé (17) étant réalisée sous la forme d'un élément coulissant et étant guidée de manière mobile en hauteur dans des guides à fente (14.1) de l'élément de clé (13).

2. Structure selon la revendication 1, **caractérisée en ce que** les vérins (1, 2) de deux ranchers avant (11) et les vérins (3, 4) de deux ranchers arrière (11) =transfèrent leurs ranchers respectifs ensemble dans leur position verticale relevée.

3. Structure selon la revendication 1 ou 2, **caractérisée en ce que** les vérins (1, 2, 3, 4) transfèrent leurs ranchers respectifs dans leur position verticale maximale.

4. Structure selon l'une quelconque des revendications 1 à 3, **caractérisée en ce que** les vérins (1, 2, 3, 4) de ranchers contigus sont commutables de manière synchrone.

5. Structure selon la revendication 4, **caractérisée en ce que** les vérins (1, 2, 3, 4) sont réalisés comme de vérins hydrauliques et le fluide hydraulique peut être amené d'une pompe hydraulique (5) à l'un des vérins (1, 3) d'un rancher avant et d'un rancher arrière (11), et le fluide hydraulique est amené du premier vérin (1, 3) respectif au second vérin (2, 4) commuté de manière synchrone du rancher avant (11) ou du rancher arrière (11).

6. Structure selon la revendication 4 ou 5, **caractérisée en ce que** la clé (17) peut être introduite dans des évidements perforés (14) de l'élément de clé (13).

7. Structure selon la revendication 6, **caractérisée en ce que** la clé présente des formations de blocage (17.2) pouvant être introduites dans des évidements perforés (14) de l'élément de clé (13).

8. Structure selon l'une quelconque des revendications 1 à 7, **caractérisée en ce que** la clé (17) peut être détachée de l'élément de clé (13) à l'aide d'une dragonne (17.5).

9. Structure selon l'une quelconque des revendications 4 à 8, **caractérisée en ce que** la pièce de poussée intérieure (12) comporte une tôle de protection (16) qui est disposée à distance de celle-ci et qui est réglable en hauteur avec la pièce de poussée (12) et couvre lors d'un réglage en hauteur l'étendue du réglage en hauteur.

10. Structure selon la revendication 9, **caractérisée en ce que** la tôle de protection (16) présente une extension longitudinale qui correspond au réglage en hauteur maximal du rancher (11).
